# EUROPÄISCHE PATENTANMELDUNG

(11) **EP 0 739 776 A2**
(43) Veröffentlichungstag der Anmeldung: **30.10.1996**
(21) Anmeldenummer: 96105306.3
(22) Anmeldetag: 03.04.1996
(51) Int. Cl.: B60R 16/02

(54) **Fahrzeugzusatzeinrichtung, insbesondere Fahrzeugzusatzheizgerät, sowie Verfahren zu deren Ansteuerung**

(30) Priorität: 26.04.1995 DE 19515354
(71) Anmelder: Firma J. Eberspächer, 73730 Esslingen (DE)
(72) Erfinder: Hirt, Andreas, 73207 Plochingen (DE)

(57) **Zusammenfassung**

Bei einem Verfahren zur Ansteuerung einer Fahrzeugzusatzeinrichtung (2), insbesondere eines Fahrzeugzusatzheizgeräts, über eine zugeordnete Steuereinrichtung (16) mittels eines Bedienelements (3) wird vorgeschlagen, die ohnehin im Fahrzeug vorhandenen elektrischen Versorgungsleitungen (4, 5) zu nutzen, um Daten durch entsprechende Übertrager (13, 14) des Bedienelements (3) bzw. der Fahrzeugzusatzeinrichtung in diese bestehende Leitungsverbindung einzukoppeln und vom jeweiligen Empfänger auszuwerten.

## Beschreibung

Die Erfindung betrifft ein Verfahren zur Ansteuerung einer Fahrzeugzusatzeinrichtung, insbesondere eines Fahrzeugheizgerätes, über eine zugeordnete Steuereinrichtung mittels eines Bedienelements, sowie eine auf diese Weise angesteuerte Fahrzeugzusatzeinrichtung selbst.

Es ist bekannt, Fahrzeugzusatzeinrichtungen aus technischen oder aus Raumgründen an anderer Stelle zu plazieren als das zugehörige Bedienelement, mit welchem die Fahrzeugzusatzeinrichtung von einer Benutzungsperson betätigt werden kann. Beispielsweise wird eine Fahrzeugzusatzeinrichtung in Form eines Fahrzeugzusatzheizgerätes im Bereich des Bodens der Fahrgastzelle montiert, während das dazugehörige Bedienelement im Armaturenbrett angeordnet ist. Bedienelement und Fahrzeugzusatzheizgerät müssen in einer Wirkverbindung stehen, entweder über eine Funkverbindung oder über entsprechend verlegte Kabel. Eine Kabelverlegung ist vergleichsweise aufwendig, insbesondere dann, wenn eine Fahrzeugzusatzeinrichtung nachträglich in ein Fahrzeug eingebaut werden soll. Eine Funkverbindung verringert zwar den Aufwand bei einem nachträglichen Einbau eines Zusatzheizgeräts, ist aber ebenfalls aufwendig und nicht in jedem Fall störungssicher.

Aufbauend auf vorgenanntem Stand der Technik ist es Aufgabe der Erfindung, ein Verfahren der eingangs genannten Art zu schaffen, bei dem eine Fahrzeugzusatzeinrichtung, insbesondere ein Fahrzeugheizgerät, sehr einfach angesteuert werden kann.

Gelöst wird die der Erfindung zugrundeliegende Aufgabe durch ein Verfahren der im Patentanspruch 1 angegebenen Art.

Vorteilhaft weitergebildet wird das erfindungsgemäße Verfahren nach den Merkmalen des Patentanspruchs 2.

Eine erfindungsgemäße Fahrzeugzusatzeinrichtung, insbesondere ein erfindungsgemäßes Fahrzeugzusatzheizgerät, kennzeichnet sich durch die Merkmale des Patentanspruchs 3.

Wesen der Erfindung ist, die bestehende elektrische Hauptversorgungsleitung des Fahrzeugs zur Ansteuerung von Fahrzeugzusatzeinrichtungen/Fahrzeugzusatzheizgeräten zu nutzen.

Wird eine Fahrzeugzusatzeinrichtung in ein Fahrzeug eingebaut, so muß diese Einrichtung zwangsläufig elektrisch mit dem Bordnetz verbunden werden. Diese zweipolige Verbindung wird in der Regel mit Kl.30 (Dauerplus) und mit Kl.31 (Fahrzeugmasse) ausgeführt. Diese Bordnetzhauptleitungen ziehen sich durch das gesamte Fahrzeug. Somit ergibt sich eine Leitungsverbindung von der Zusatzeinrichtung bis zu fast jedem Punkt des Fahrzeugs.

Zur Ansteuerung der Fahrzeugzusatzeinrichtung benötigt man ein Bedienelement. Das Bedienelement kann eine eigenständige Stromversorgung (z.B. eine Batterie) beinhalten. Es ist jedoch sinnvoller, eine elektrische Verbindung zum vorhandenen Bordnetz herzustellen. Dadurch kann der kostspielige Austausch der eigenständigen Stromversorgung (Batteriewechsel) entfallen. Durch diese Verbindung ergibt sich zwangsläufig auch sofort eine durchgehende Leitungsverbindung über Kl. 30 zwischen Zusatzeinrichtung und Bedienelement. Über diese bestehende Leitungsverbindung werden die Signale bzw. Daten durch entsprechende Übertrager eingekoppelt und vom jeweiligen Empfänger, Steuereinrichtung oder in umgekehrter Richtung Bedienelement, ausgewertet.

Aufgrund der für die Datenübertragung zwischen Fahrzeugzusatzeinrichtung und Bedienelement nötigen geringen Baudrate kann eine Störung von anderen Steuergeräten, welche auch mit dieser Hauptversorgung (Kl. 30) verbunden sind, ausgeschlossen werden.

Besonderer Vorteil der Erfindung ist, daß kein zusätzlicher Materialaufwand bezüglich der Verbindungsleitungen zwischen den Fahrzeugzusatzeinrichtungen und dem Bedienelement beim Einbau in einem Personenkraftfahrzeug oder in einem Nutzfahrzeug gegeben ist.

Ferner entfällt bei nachträglichen Fahrzeugeinbauten der arbeitszeitintensive Aufwand der Leitungsverbindung zwischen im Motorraum verbauten Fahrzeugzusatzeinrichtungen und in der Fahrgastzelle untergebrachten Bedienelementen. Diese zusätzlichen Leitungen müssen normalerweise durch die Spritzwand hindurch zwischen Motorraum und Fahrgastzelle verlegt werden.

Ein weiterer Vorteil der erfindungsgemäßen leitungsgebundenen Datenübertragung ist, daß gegenüber einer HF-Datenübertragung (Funkverbindung) die zeit- und kostenintensive Zulassung durch entsprechende Prüfungsämter entfallen kann.

Gegenüber einer HF-Datenübertragung hat die Erfindung schließlich den Vorteil, daß ein geringerer Hardwareaufwand nötig ist, um die Datenübertragungsverbindung zwischen Sender und Empfänger herzustellen.

Die Erfindung wird nachfolgend anhand eines Ausführungsbeispiels unter Bezugnahme auf die beigefügte Zeichnung näher erläutert; es zeigen:

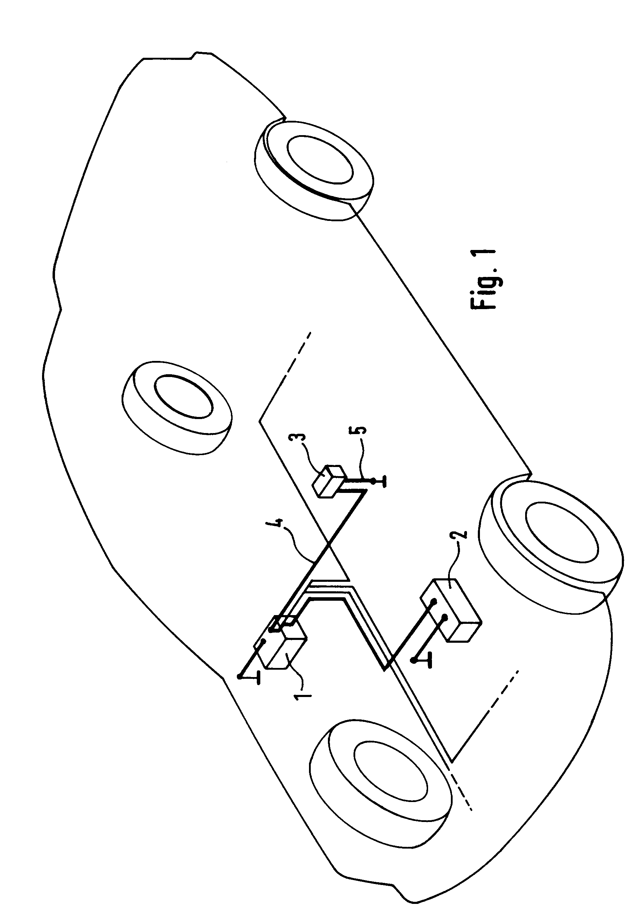

- Fig. 1: die schematische Anordnung einer Fahrzeugzusatzeinrichtung in einem Fahrzeug mit entsprechender Leitungsverbindung, und
- Fig. 2: ein Blockschaltbild der Anordnung nach Fig. 1.

Gemäß Zeichnung befindet sich eine Fahrzeugzusatzeinrichtung 2, insbesondere ein Fahrzeugzusatzheizgerät, im Motorraum des Fahrzeugs, während das dazugehörige Bedienelement 3 im Armaturenbrettbereich angeordnet ist.

Die Fahrzeugzusatzeinrichtung 2 ist elektrisch mit dem Bordnetz, d.h. der Fahrzeugbatterie 1, verbunden.

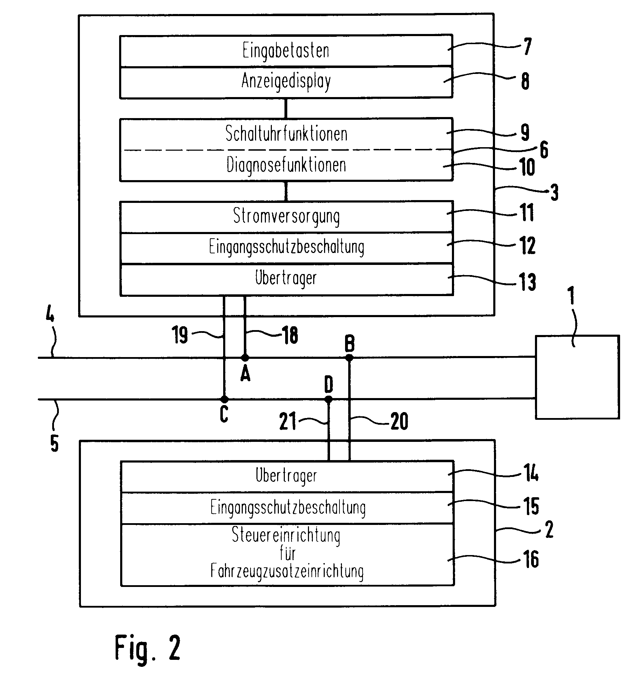

Wie insbesondere dem Blockschaltbild nach Fig. 2 zu entnehmen ist, umfaßt das Bedienelement 3 in bekannter Weise Eingabetasten 7, Anzeigedisplay 8 sowie einen Mikroprozessor 6, welcher Schaltuhrfunktionen 9 und Diagnosefunktionen 10 ausübt. Auch besitzt im Ausführungsbeispiel das Bedienelement 3 eine eigene Stromversorgung 11 und eine Eingangsschutzbeschaltung 12.

Eine Eingangsschutzbeschaltung 15 besitzt gleichermaßen die Steuereinrichtung 16 der Fahrzeugzusatzeinrichtung 2.

Während bei bekannten Anordnungen eine direkte Leitungsverbindung zwischen Bedienelement 3 und Fahrzeugzusatzeinrichtung 2 vorgesehen ist, sind erfindungsgemäß ein bedienteilseitiger Übertrager 13 und ein steuereinrichtungsseitiger weiterer Übertrager 14 vorgesehen, die über Leitungszweige 18,19 bzw. 20,21 mit dem Bordnetz des Kraftfahrzeugs verbunden sind. Insbesondere ist der Leitungszweig 18 des Übertragers 13 mit der Hauptversorgungsleitung 4 (Kl. 30 (Dauerplus)) im Punkt A verbunden, während der Leitungszweig 19 des gleichen Übertragers 13 an die Hauptmasse 5 (Kl. 31 (-)) im Punkt C angeschlossen ist.

In entsprechender Weise sind die Leitungszweige 20 und 21 des weiteren Übertragers 14 zu den Anschlußpunkten B bzw. D der Hauptversorgungsleitung 4 bzw. der Hauptmasse 5 geführt.

Ersichtlich fallen also erfindungsgemäß die Punkte A und B nicht zusammen, wie dies beim Stand der Technik der Fall ist. Vielmehr wird erfindungsgemäß die Leitungsstrecke AB der ohnehin vorhandenen Hauptversorgungsleitung 4 zur Datenübertragung bei der Ansteuerung der Fahrzeugzusatzeinrichtung durch das Bedienelement 3 ausgenutzt. Die Anschlußpunkte A und B (sowie die Anschlußpunkte C und D für die Hauptmasse) können also an irgendeiner Stelle des Fahrzeugs je nach den baulichen Gegebenheiten optimal gewählt werden. Befindet sich also zwischen den Anschlußpunkten A und B beispielsweise die Spritzwand zwischen Motorraum und Fahrgastzelle, so kann gleichwohl eine Fahrzeugzusatzeinrichtung nachträglich mit geringem baulichen Aufwand in das Fahrzeug installiert werden.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

## Patentansprüche

1. Verfahren zur Ansteuerung einer Fahrzeugzusatzeinrichtung (2), insbesondere eines Fahrzeugzusatzheizgerätes, über eine zugeordnete Steuereinrichtung (16) mittels eines Bedienelements (3),
dadurch gekennzeichnet,
daß die bestehende elektrische Hauptversorgungsleitung (4, 5) des Fahrzeugs genutzt wird.

2. Verfahren nach Anspruch 1,
dadurch gekennzeichnet,
daß über die bestehende elektrische Hauptversorgungsleitung (4, 5) die Steuersignale (Daten) durch entsprechende Übertrager (13, 14) eingekoppelt und vom jeweiligen Empfänger (Steuereinrichtung 16 bzw. Bedienelement 3) ausgewertet werden.

3. Fahrzeugzusatzeinrichtung, insbesondere Fahrzeugzusatzheizgerät, welche(s) nach einem der Verfahren nach einem der Ansprüche 1 oder 2 angesteuert wird, mit Steuereinrichtung (16) und Bedienelement (3),
dadurch gekennzeichnet,
daß ein bedienteilseitiger Übertrager (13) und ein steuereinrichtungsseitiger weiterer Übertrager (14) vorgesehen sind, welche an die bestehende elektrische Hauptversorgungsleitung (4, 5) über Leitungszweige (18, 19; 20, 21) angekoppelt sind.
